# EUROPÄISCHE PATENTSCHRIFT

(11) **EP 1 708 799 B1**
(45) Veröffentlichungstag und Bekanntmachung des Hinweises auf die Patenterteilung: **18.04.2012**
(21) Anmeldenummer: 04765644.2
(22) Anmeldetag: 28.09.2004
(51) Int. Cl.: B01D 29/15, B01D 29/21, B01D 29/92, B01D 35/147, F02B 23/06

(54) **FILTERELEMENT**
FILTER ELEMENT
ELEMENT FILTRE

(30) Priorität: 03.02.2004 DE 102004005202
(43) Veröffentlichungstag der Anmeldung: 11.10.2006
(73) Patentinhaber: HYDAC FILTERTECHNIK GMBH, 66280 Sulzbach/Saar (DE)
(72) Erfinder: KOCH, Edwin, 666 36 Tholey (DE); SCHWENDER, Matthias, 66459 Kirkel (DE); LANGE, Sören, 68775 Ketsch (DE)
(74) Vertreter: Bartels, Martin Erich Arthur
(86) Internationale Anmeldenummer: PCT/EP2004/010824
(87) Internationale Veröffentlichungsnummer: WO 2005/075055

(56) Entgegenhaltungen:
- EP-A- 0 402 657
- GB-A- 2 300 367
- US-A- 6 099 726
- US-B1- 6 168 713

## Beschreibung

Die Erfindung betrifft ein Filterelement mit einem Filtermedium, das sich zwischen zwei Endkappen erstreckt, gemäß der Merkmalsausgestaltung des Oberbegriffes des Patentanspruches 1.

Filterelemente sind in einer Vielzahl von Ausführungsformen handelsüblich, und finden, beispielsweise bei Hydraulikanlagen in von Hydraulikölen durchströmten Systemzweigen, verbreitete Anwendung. Die bekannten Filterelemente sind hinsichtlich ihrer Betriebssicherheit und der Stabilität des für die Filterleistung maßgebenden Beta-Wertes nicht völlig zufriedenstellend. Insbesondere bei hohen Durchflußleistungen besteht die Gefahr, dass es an der Verbindungsstelle, an der die Enden der Filtermattenbahn zu dem den Filterzylinder bildenden Ringkörper vereinigt sind, zu Verformungen oder Beschädigungen aufgrund des Fluid-Differenzdruckes kommt, der an der Verbindungsstelle wirksam ist. Solche Beeinträchtigungen und/oder Verformungen der Falten im Bereich der Verbindungsstelle werden allgemein mit dem Fachausdruck "Beulen der Falten" bezeichnet.

Um dem zu begegnen, ist beispielsweise in der nachveröffentlichten DE 102 50 969 A1 bereits vorgeschlagen worden, die Abfolge der Falten für das Filtermedium des Filterelementes derart zu wählen, dass auf jede Falte, die sich über die gesamte radiale Erstreckung des Zwischenraumes von der äußeren Mantelfläche bis zum inneren Stützrohr erstreckt, jeweils eine Falte folgt, deren radial innenliegender Faltenrücken sich in einem Abstand von einem inneren Stützrohr des Elementes befindet, und auf die wiederum eine sich über die gesamte radiale Erstreckung des Zwischenraumes erstreckende Falte folgt. Hierdurch ergibt sich eine verbesserte Beta-Wert Stabilität, selbst bei hohen Durchflußleistungen.

Ferner kann bei den bekannten Lösungen der Aufbau der Filtermedien und der Filterelemente von Hersteller zu Hersteller stark variieren. Bei einfachen Papierelementen sind die Filtermatten als Filtermedien ohne unterstützende Drahtgewebe hergestellt, wobei bei höheren Differenzdrücken an den Filterelementen die Filterfalten zusammengepreßt werden können. Dadurch wird die Drainagemögtichkeit bei den gefalteten Matten verkleinert, so dass demgemäß viele Falten für die Filtration ungenutzt bleiben. Demgegenüber haben höherwertige Elemente einen mehrlagigen Mattenaufbau für das Filtermedium, wobei bei modernen Filtermedien durchaus ein sechs- und mehrlagiger Aufbau möglich ist, beispielsweise in Form einer Aufeinanderfolge folgender Lagen: eine äußere Abstützung, ein Schutzvlies, eine Vorfilterlage, eine Hauptfilterfage, ein Stützvlies und eine innere Abstützung. Darüberhinaus kann, wenn als Filtermaterial eine mehrlagig aufgebaute Filtermattenbahn wie vorstehend beschrieben vorgesehen ist, diese eine die äußere Mantelfläche bildende äußere Abstützung in Form einer Gitter- oder Gewebestruktur aufweisen. Hierbei kann es sich um eine Struktur auf Polyamid- oder Polyesterbasis handeln, und alternativ kann die mehrlagige Filtermattenbahn ein metallisches Gitter als die äußere Mantelfläche bildende äußere Abstützung aufweisen. Das dahingehend mehrlagig aufgebaute Filtermedium wird in der Fachsprache auch als Meshpack bezeichnet, und wird in der Regel in einer Richtung von dem verschmutzten Fluid (häufig regelmäßig von außen nach innen durchströmt), wobei Verschmutzungsanteile im Filtermedium verbleiben.

Zur druckstabilen Ausbildung des Filterelementes ist darüber hinaus vorgesehen, dass im Inneren ein Stützrohr, vorzugsweise aus Kunststoffmaterial angeordnet ist, das mit Perforationen versehen die Abstützung des Filtermediums entgegen der vorgesehenen Durchströmungsrichtung vornimmt. Die beiden Endkappen zwischen denen sich das Filtermedium, sowie bei Bedarf das Kunststoffstützrohr erstreckt, sind ebenfalls vorzugsweise aus Kunststoffmaterialien gebildet, insbesondere das Kunststoffstützrohr in der Art eines Spritzgußteils. Da das Filtermedium zur Fixierung mit den Endkappen regelmäßig mit diesen im Bereich seiner freien Enden verklebt wird, stellt der eingesetzte Klebstoff häufig in Form eines Epoxydharzklebstoffes eine Art Isolationsschicht zwischen eingesetztem Filtermedium, den beiden Endkappen und/oder dem Stützrohr her, wobei der Isolationseffekt noch dadurch weiter verstärkt ist, dass das Stützrohr vorzugsweise immer länger ausgeführt ist, als das eigentliche Filtermedium (Meshpack), damit auf dieses keine Kräfte in Längsrichtung einwirken können. Wird eine dahingehende Krafteinleitung nicht vermieden, ist nicht auszuschließen, dass aufgrund der auftretenden Druckbeanspruchungen beim Durchströmen des Filtermediums mit dem Fluid dieses geschädigt wird, und dergestalt ist dann eine ausreichende Filtrationsleistung nicht mehr gewährleistet.

Durch den angesprochenen Isolationsaufbau, bedingt durch Isolationsschichten zwischen Filtermedium, Endkappen, sowie dem Stützrohr, kommt es beim Fluiddurchtritt mit eventuell vorliegender Verschmutzung am Filtermedium zu elektrostatischen Aufladungen insbesondere des Filtermediums. Aufgrund der derart erzeugten Potentialunterschiede innerhalb des Filterelementes kann es dann plötzlich zu Entladungen kommen, zwischen statisch aufgeladenen Filterelementteilen, insbesondere in Form des Filtermediums und elektrisch leitenden Komponenten, insbesondere in Form des regelmäßig metallischen Filtergehäuses, in dem das Filterelement aufgenommen ist, mit der Folge, dass es zu Funkenentladungen kommt, was im Hinblick auf die Brennbarkeit der zu filtrierenden Medien wie Hydrauliköl, Schwerölkraftstoffe wie Dieselkraftstoffe oder dergleichen, nicht gerade als unkritisch zu bewerten ist, und die angesprochenen Funkenentladungen können auch zu einer Schädigung des Öls sowie des empfindlichen Filtermediummateriales führen.

Um dem zu begegnen, ist in der EP 0 402 657 A2 bereits ein elektrisch leitfähiges Filter vorgeschlagen worden mit einem zick-zack-förmig gefalteten, bahnförmigen Filtermaterial, das auf zumindest einer Seite eine elektrisch leitfähige Oberflächenschicht auf einem nicht leitfähigen Grundmaterial aufweist und das an seinen Faltenstirnseiten in einem elektrisch leitfähigen Rahmen über Dichtmaterial gefaßt ist, wobei an zumindest einer Faltenstirnseite das Dichtmaterial elektrisch leitfähig ist, sei es in Form eines aufgewalzten elektrisch leitfähigen Weichmetallbandes, sei es in Form einer Metallfadenbesäumung der Längsränder des Filtermaterials und/oder sei es durch die Verwendung eines elektrisch leitfähigen Dichtmaterials innerhalb einer zuordenbaren Endkappe des Filters. Das Aufbringen des Metallbandes und/oder der Metallfadenbesäumung und/oder des leitfähigen Dichtmaterials ist aufwendig in der Herstellung und durch die entsprechende Gestaltung der Längsränder des Filterelements geht insoweit wirksame Filterfläche verloren. Eine vergleichbare Lösung ist auch in der US-A-6,099,726 aufgezeigt, die eine Vielzahl von leitfähigen Elementen für ein Filterelement einsetzt, wie Filtermaterial, Stützrohr, Endkappen, Klebstoffbett, O-Ring, was ebenfalls zu hohen Herstellkosten führt. Trotz der Vielzahl an Maßnahmen zur Vermeidung von Potentialunterschieden bei den bekannten Lösungen, kann es insbesondere bei Fertigungsungenauigkeiten dennoch zu den unerwünschten Funkentladungen kommen.

Die WO 2004/009215 A1 betrifft einen Abscheider zur Reinigung eines Fluidstroms, insbesondere zur Entölung eines Gasstromes. Der Abscheider weist ein Filtermedium und eine Endkappe auf, wobei die Endkappe mit dem Filtermedium verbunden ist. Das Filtermedium dient zur Abscheidung von Verunreinigungen, insbesondere von Öl aus einem Fluidstrom. Um zu verhindern, dass das Filtermedium sich elektrostatisch auflädt, ist bei dieser bekannten Lösung ein elektrisch leitfähiger Kontaktstreifen vorgesehen, welcher sowohl mit dem Filtermedium als auch mit der Endkappe elektrisch leitend verbunden ist. Der elektrisch leitfähige Kontaktstreifen ist derart ausgebildet, dass eine elektrisch leitfähige Verbindung zwischen dem Filtermedium und der Endkappe gebildet wird, so dass mit der Endkappe eine Erdung des Filtermediums erreicht ist.

Ausgehend von. diesem Stand der Technik liegt der Erfindung die Aufgabe zugrunde, die bekannten Filterelemente unter Beibehalten ihrer Vorteile, nämlich eine hohe Betriebssicherheit und hohe Beta-Wert Stabilität selbst bei hohen Durchflußleistungen an zu filtrierendem Medium zu gewährleisten, dahingehend weiter zu verbessern, dass es insbesondere im Betrieb des Filterelementes nicht zu Potentialunterschieden zwischen Teilen des Filterelementes kommen kann, die zu Funkenentladungen führen, wobei die dahingehende Lösung besonders funktionssicher und kostengünstig sein soll. Eine dahingehende Aufgabe löst ein Filterelement mit den Merkmalen des Patentanspruchs 1 in seiner Gesamtheit.

Dadurch, dass gemäß dem kennzeichnenden Teil des Patentanspruches 1 die ableitfähigen Kontaktelemente aus Kontaktstiften bestehen, die mit ihrem einen freien Ende das Klebstoffbett durchgreifen und im Bereich des anderen freien Endes senkrecht auf der jeweils zuordenbaren Endkappe aufstehen, ist sichergestellt, dass die durch tribo-elektrische Effekte am Filtermedium (Meshpack) generierte Ladung über die Kontaktierungseinrichtung und die jeweilige Endkappe an einen Massepunkt oder Massestelle abfließen kann, beispielsweise gebildet aus metallischen Gehäuseteilen, in denen das Filterelement unter Bildung einer Filtervorrichtung aufnehmbar ist. Aufgrund der dahingehenden Ableitung sind Spannungsspitzen innerhalb des Filterelementes vermieden, mit ihrer nachteiligen Folge, dass es gegebenenfalls zu Funkenentladungen kommt, die das Filterelement selbst schädigen könnten.

Mit der erfindungsgemäßen Lösung wird also die aus dem Klebstoffbett bestehende Isolationsschicht durch die Kontaktelemente in Form der Kontaktstifte überbrückt, wobei diese derart dimensioniert sind, dass jedenfalls die Dicke des Klebstoffbettes und die Fertigungstoleranzen für das Filtermedium (Meshpack) sicher für eine Ableitung an Ladungspotential durchgriffen sind. Die im Filtermedium herrschende Ladung kann somit über die ableitfähigen Stifte, die vorzugsweise zusammen mit der O-ringförmigen Kappe als Endkappe des Filterelementes gespritzt werden, über diese Endkappe zum Gehäuse als Massepunkt oder Massestelle hin abfließen, und ein Durchschlagen der Ladung mit Funkenbildung innerhalb des Elementes ist derart mit Sicherheit vermieden.

Bei einer bevorzugten Ausführungsform des erfindungsgemäßen Filterelementes sind zur Bildung der ableitfähigen Endkappe oder ihrer Teile Kunststoffe mit Leitfähigkeitsadditiv, leitfähige Beschichtungen oder intrinsisch leitfähige Kunststoffe eingesetzt. Als Leitfähigkeitsadditiv besonders geeignet für sog. gefüllte Kunststoffe sind Edelstahlfasem, Aluminium Flakes, metallisierte Glasfasern oder Kohlefasern einschließlich Leitruß. Ableitfähige Beschichtungen lassen sich galvanisch auftragen oder durch Hochvakuum-Bedampfen, durch Lackieren mit Leitlack sowie mittels Flamm-, Lichtbogen-oder Plasmaspritzen. Ferner ist der Auftrag von Nanobeschichtungen hier denkbar. Intrinsisch leitfähige Kunststoffe (ICP-Intrinsically Conducting Polymers) sind Kunststoffe, bei denen die Leitfähigkeit durch Dotierung erzielt wird. Hiefür geeignete Kunststoffe sind insbesondere Polyacetylen, Polypyrrol, Polythiophen sowie Polyanilin.

Bei einer weiteren bevorzugten Ausführungsform des erfindungsgemäßen Filterelementes weist die jeweilige Endkappe nach innen und außen hin vorstehende Ringflächen auf, zwischen die der zuordenbare Endbereich des Filtermediums eingreift, und die Ringflächen nehmen nicht nur zwischen sich die Kontaktierungseinrichtung auf, sondern dienen auch als seitlicher Halt für den Klebstoff, sobald dieser in die Endkappe für einen Verbindungsvorgang eingefüllt wird.

Bei einer weiteren bevorzugten Ausführungsform des erfindungsgemäßen Filterelementes weist zumindest diejenige Endkappe mit der Kontaktiertungseinrichtung ein Anschlußteil auf, zum Festlegen des Filterelementes in einem Filtergehäuse, wobei eine Dichteinrichtung, insbesondere in Form eines O-Dichtringes, die zwischen Filtergehäuse und der Endkappe des Filterelementes angeordnet ist, ableitfähig ausgebildet ist. Dank des ableitfähigen O-Ringes braucht das Filterelement mit seiner Stirnfläche nicht zwingend an das, das Filterelement umgebende Gehäuse angedrückt werden, um dadurch den notwendigen Ableitkontakt herzustellen. Vielmehr kann dann zusätzlich oder alternativ eine Version des Filterelementes denkbar sein, mit ableitfähigen O-Ring zur Ableitung des Potentialunterschiedes.

Weitere vorteilhafte Ausführungsformen des erfindungsgemäßen Filterelementes sind Gegenstand der sonstigen Unteransprüche.

Im folgenden, wird das erfindungsgemäße Filterelement anhand eines Ausführungsbeispieles nach der Zeichnung näher erläutert. Dabei zeigen in prinzipieller und nicht maßstäblicher Darstellung die
- Fig. 1: im teilweise aufgeschnittenen Zustand eine Längsansicht auf das Filterelement,
- Fig. 2: einen Längsschnitt durch das Filterelement nach der Fig. 1.

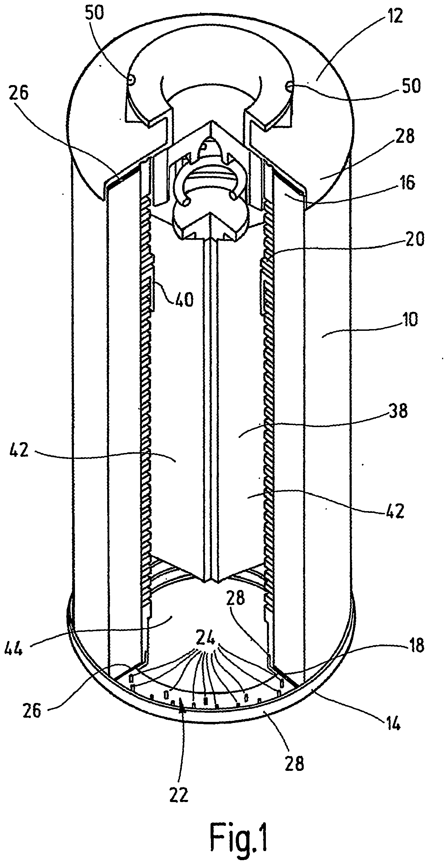

Das erfindungsgemäBe Filterelement weist ein Filtermedium 10 auf, das sich zwischen zwei Endkappen 12, 14 erstreckt, die jeweils mit einem zuordenbaren Endbereich 16, 18 des Filtermediums 10 verbunden sind, das sich im übrigen innenumfangseitig an einem Stützrohr 20 abstützt. In Blickrichtung auf die Fig. 1 gesehen weist die untere Endkappe 14, eine als Ganzes mit 22 bezeichnete Kontaktierungseinrichtung auf, zwecks Ableiten einer, insbesondere im Betrieb des Filterelementes auftretenden, elektrostatischen Aufladung.

Die Kontaktierungseinrichtung 22 besteht aus einzelnen leitfähigen Kontaktelementen, insbesondere in Form einzelner Kontaktstifte 24, die eine Art Isolationsschicht bildendes Klebstoffbett 26 zwischen Endkappe 14 und aufgenommenen Endbereich 18 des Filtermediums 10 durchgreifen, und derart in ableitfähiger Anlage mit dem Filtermedium 10 kommen. Insoweit Durchstoßen also die Kontaktstifte 24 das Klebstoffbett 26, und diese stehen im übrigen im Berelch ihres anderen freien Endes senkrecht auf der jeweils zuordenbaren Endkappe 14 auf. Die dahingehende Anordnung kann dem Grunde nach an beiden Endkappen 14, 16 vorgesehen sein; es genügt aber auch die Anordnung an nur einer Endkappe 14, um dergestalt die Ableitung über diese Endkappe 14 mit den Massestellen eines Gehäuses (nicht dargestellt) sicherzustellen, in dem das Filterelement unter Bildung einer Filtervorrichtung aufnehmbar ist.

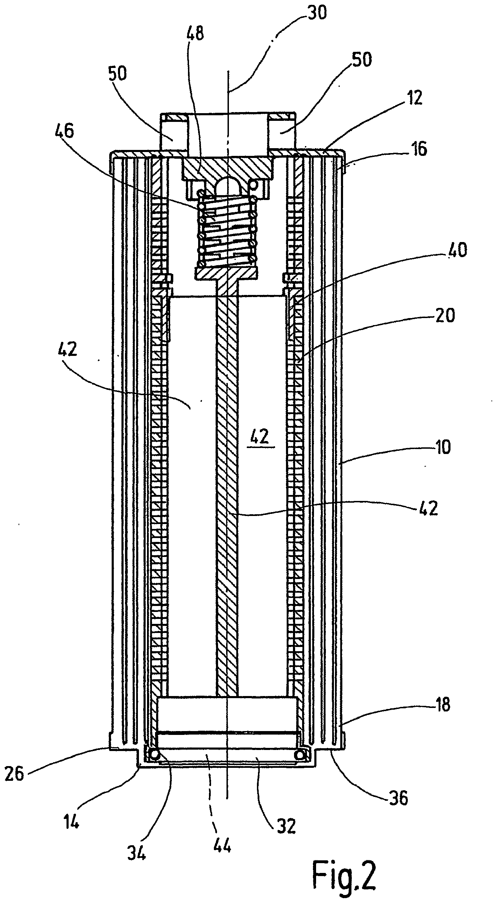

Wie insbesondere die Schnittdarstellung nach der Fig. 2 zeigt, kann das Filtermedium 10 in der Art einer Filtermatte mehrlagig, beispielsweise sechslagig aufgebaut sein, und dabei in Aufeinanderfolge folgende Lagen aufweisen:
eine äußere Abstützung, ein Schutzvlies, eine Vorfilterlage, eine Hauptfilterlage, ein Stützvlies und eine innere Abstützung, wobei für die äußere Abstützung ein Polyamidgitter oder ein Polyestergewebe in Frage kommt. Die innere Abstützung der Filtermatte kann sich dann an dem Außenumfang des fluiddurchlässigen Stützrohres 20 abstützen oder durch dieses Stützrohr 20 selbst gebildet sein.

Da es aus Gewichtsgründen, sowie aus Gründen des Recyclings günstig ist, das gesamte Filterelement aus Kunststoffmaterialien aufzubauen, geht dies mit dem Problem der verstärkt statischen Aufladung einher, wie sie entsteht, wenn zu filtrierendes Fluid, beispielsweise wie im vorliegenden Fall von außen nach innen, das Filtermedium 10 durchströmt. In dahingehenden Fällen kommt es dann innerhalb des Kunststofffilterelementes zu Potential- bzw. Ladungsunterschieden mit der Folge, dass bei Überschreiten einer vorgebbaren Ladungsdifferenz es zum Über- oder Durchschlagen mit entsprechender Funkenentladung kommt. Da grundsätzlich das zu filtrierende Medium brennbar ist, ist somit ein Risiko im Betrieb, mit den reinen Kunststofffilterelementen gegeben. Aufgrund der Kontaktierungseinrichtung 22 mit den Kontaktstiften 24 hingegen ist es möglich, die auftretenden Potentialunterschiede und Ladungen über die Endkappen, insbesondere die untere Endkappe 14 in den durch das Gehäuse bildenden Massepunkt abzuleiten, und statisch relevante Potential unterschiede nebst Funkenentladung sind somit mit Sicherheit vermieden.

Das Filtermedium 10 ist nach der Darstellung in den Figuren als zylindrische Filtermatte wiedergegeben; es besteht aber auch die Möglichkeit, die einzelnen Filtermattenlagen plissiert entlang eines zylindrischen Umfanges auszuführen, um dergestalt die wirksame Filterfläche zu erhöhen. Auch ist ein Filtermattenaufbau denkbar, wie in der nachveröffentlichten DE 102 50 969 A1 angegeben. Beim Aufbau des dahingehenden Filtermediums 10, mit seinen Einzellagen ist aber vorzugsweise darauf zu achten, dass diese dann aus entsprechend ableitfähigen Kunststoffmaterialien bestehen. Wie sich des weiteren insbesondere aus der Fig. 1 ergibt, ist die jeweilige Endkappe 12, 14 nach innen und außen hin jeweils mit einer vorstehenden Ringfläche 28 versehen, die zwischen sich das Klebstoffbett 26 integriert. Zwischen den beiden Ringflächen 28 der unteren Endkappe 14 erstrecken sich dann wiederum in paralleler Längsausrichtung zu der Längsachse 30 des Filterelementes sich die einzelnen Kontaktstifte 24. Die leitfähigen Kontaktelemente oder Kontaktstifte 24 können aus Metall bestehen; sind jedoch bevorzugt aus einem leitfähigen Kunststoffmaterial ausgebildet, das sich gemeinsam mit der Endkappe 14 in einem Arbeitsgang spritzen laßt.

Des weiteren kann die jeweilige Endkappe 14 mit der Kontaktierungseinrichtung 22 einen Anschlußteil 32 (vgl. Fig. 2) aufweisen, zum Festlegen des Filterelementes in einem Filtergehäuse (nicht dargestellt), wobei die eine Dichteinrichtung 34, beispielsweise in Form eines üblichen O-Dichtringes, der zwischen Filtergehäuse und der einen Endkappe 14 des Filterelementes angeordnet ist, ableitfähig ausgebildet ist. In der Regel müsste der dahingehende O-Ring nicht ableitfähig sein, da das Filterelement mit seiner Stirnfläche 36 an das Aufnahmeteil des Filtergehäuses angedrückt wird, wodurch der leitfähige Kontakt zustandekommt. Demgemäß wäre es aber auch möglich, über den O-Ring der Dichteinrichtung 34 die dahingehende Ableitung vorzunehmen, sofern der O-Ring aus ableitfähigem Material besteht oder dergestalt beschichtet ist. Wie sich des weiteren aus der Fig. 1 ergibt, sind die Kontaktstifte 24 in konzentrischen Kreisen zu der Längsachse 30 des Filterelementes innerhalb der Endkappe 14 angeordnet, wobei der zuäußerst verlaufende fiktive Kreis mehr Kontaktstifte 24 aufweist, denn der innere Kreis.

Wie sich des weiteren aus den Figuren ergibt, ist innerhalb des Stützrohres 20 längs dessen Verrippung, die die Fluid-Durchtrittstellen begrenzen, ein Trennsegment 38 eingehängt oder an einer Verbindungsstelle 40 entsprechend eingeclippt, wobei die einzelnen Trennwände 42 des dahingehenden Segmentes 38 eine Strömungsführung im Inneren des Filterelementes ermöglichen, und zwar in Richtung einer Durchtrittstelle 44 im Bereich der unteren Endkappe 14. In Verlängerung nach oben hin weist das Trennsegment 38 einen mittels einer Druckfeder 46 beaufschlagten, plattenartigen Schließkörper 48 auf, der dergestalt eine Bypassfunktion wahrnimmt, dass bei zugesetztem Filtermedium 10 das nicht gereinigte Fluid über die diametral einander gegenüberliegenden Eintrittstellen 50 im oberen Endkappenbereich 12 in das Innere des Filterelementes 10 eintreten kann, zur Durchströmung desselben und Austritt in Richtung der unteren Durchtrittstelle 44, wobei die Bypassfunktion sich von ihrem Auslöseverhalten her, über die vorgebbare Federkraft der Druckfeder 46 einstellen läßt.

Mit der erfindungsgemäßen Lösung ist es jedenfalls möglich, auch bei reinen Kunststoffelementen oder bei solchen Filterelementen, die überwiegend aus Kunststoffmaterialien aufgebaut sind, das Problem der statischen Aufladung nebst Funkenentladung sicher in den Griff zu bekommen, wobei die Abänderung nicht dergestalt ist, als das Druckstabilitätswerte, Beta-Werte, Filtrationsleistungen etc. eine Einschränkung erfahren würden.

Zusätzlich zu der beschriebenen Kontaktierungseinrichtung 22 ist auch die jeweilige Endkappe 14 selbst oder Teile von ihr ableitend ausgebildet. Zur Bildung der ableitfähigen Endkappe 14 oder ihrer Teile sind Kunststoffe mit Leitfähigkeitsadditiv, leitfähige Beschichtungen oder intrinsisch leitfähige Kunststoffe besonders geeignet. Als Leitfähigkeitsadditiv für sog. gefüllte Kunststoffe sind Edelstahlfasem, Aluminium Flakes, metallisierte Glasfasern, Kohlefasern aber auch Leitruß geeignet. Ableitfähige Beschichtungen lassen sich galvanisch auftragen oder mittels Hochvakuum-Bedampfen, durch Lackieren mit einem Leitlack oder durch Flamm-, Lichtbogen- sowie Plasmaspritzen. Des weiteren ist der Auftrag von sog, Nanobeschichtungen möglich. Intrinsisch leitfähige Kunststoffe (ICP) erhält man vorzugsweise durch Dotierung, wobei folgende Kunststoffe hierfür als besonders geeignet gelten: Polyacetylen, Polypyrrol, Polythiophen sowie Polyanilin. Die dahingehende Aufzählung ist nicht abschließend.

## Patentansprüche

1. Filterelement mit einem Filtermedium (10), das sich zwischen zwei Endkappen (12, 14) erstreckt, die jeweils mit einem zuordenbaren Endbereich (16, 18) des Filtermediums (10) verbunden sind, das sich zumindest an einer Seite an einem Stützrohr (20) abstützt, wobei mindestens eine der Endkappen (14) und/oder zumindest ein Endbereich (16, 18) des Filtermediums (10) eine Kontaktierungseinrichtung (22) aufweist und die jeweilige Endkappe (14) selbst oder Teile von ihr ableitend ausgebildet sind, zwecks Ableiten der, insbesondere im Betrieb des Filterelementes auftretenden, elektrostatischen Aufladungen, wobei die Kontaktierungseinrichtung (22) aus ableitfähigen Kontaktelementen besteht, die eine Art Isolationsschicht bildendes Klebstoffbett (26) zwischen einer Endkappe (14) und dem von dieser Endkappe (14) aufgenommenen Endbereich (18) des Filtermediums (10) durchgreifen und derart in ableitfähiger Anlage mit dem Filtermedium (10) kommen, **dadurch gekennzeichnet, dass** die ableitfähigen Kontaktelemente aus Kontaktstiften (24) bestehen, die mit ihrem einen freien Ende das Klebstoffbett (26) durchgreifen und im Bereich des anderen freien Endes senkrecht auf der jeweils zuordenbaren Endkappe (14) aufstehen.

2. Filterelement nach Anspruch 1, **dadurch gekennzeichnet, dass** zur Bildung der ableitfähigen Endkappe (14) oder ihrer Teile Kunststoffe mit Leitfähigkeitsadditiv, leitfähige Beschichtungen oder intrinsisch leitfähige Kunststoffe eingesetzt sind.

3. Filterelement nach Anspruch 1 oder 2, **dadurch gekennzeichnet, dass** das Filtermedium (10) aus einer plissierten oder zylindrisch geformten Filtermatte besteht mit mehrschichtig aufeinander liegenden Filterlagen, die ganz oder teilweise aus ableitfähigen Kunststoffmaterialien bestehen.

4. Filterelement nach Anspruch 3, **dadurch gekennzeichnet, dass** zumindest außen- und/oder innenumfangseitig die Filtermatte mit Gewebematerialien aus Kunststoff oder Metall verstärkt ist.

5. Filterelement nach einem der Ansprüche 1 bis 4, **dadurch gekennzeichnet, dass** das Filtermedium (10) in Durchflußrichtung sich an dem mit Durchlässen versehenen Stützrohr (20), vorzugsweise aus einem Kunststoffmaterial bestehend abstützt.

6. Filterelement nach einem der Ansprüche 1 bis 5, **dadurch gekennzeichnet, dass** die Kontaktstifte (24) aus einem leitfähigen Metall oder einem ableitfähigen Kunststoff bestehen.

7. Filterelement nach einem der Ansprüche 1 bis 6, **dadurch gekennzeichnet, dass** die Kontaktstifte (24) in konzentrischen Kreisen zu der Längsachse (30) des Filterelementes in zumindest einem (14) der beiden Endkappen angeordnet sind.

8. Filterelement nach einem der Ansprüche 1 bis 7, **dadurch gekennzeichnet, dass** mindestens eine Endkappe (14) nach innen und außen hin jeweils mit mindestens einer vorstehenden Ringfläche (28) versehen ist, zwischen die der Endbereich (18) des Filtermediums (10) aufnehmbar ist.

9. Filterelement nach einem der Ansprüche 1 bis 8, **dadurch gekennzeichnet, dass** die jeweilige Endkappe (14) mit der Kontaktierungseinrichtung (22) einen Anschlußteil (32) aufweist zum Festlegen des Filterelementes in einem Filtergehäuse und dass eine Dichteinrichtung (34), insbesondere in Form eines O-Dichtringes, die bei einer Verwendung des Filterelements zwischen einem Filtergehäuse und der Endkappe (14) des Filterelementes angeordnet ist, ableitfähig ausgebildet ist.

## Claims

1. A filter element comprising a filter medium (10) which extends between two end caps (12, 14) which are each connected to an assignable end region (16, 18) of the filter medium which is supported at least on one side on a support tube (20), at least one of the end caps (14) and/or at least one end region (16, 18) of the filter medium (10) having a contacting means (22), and the respective end cap (14) itself or parts of it being designed to be dissipative for purposes of dissipating the electrostatic charges which occur in particular during operation of the filter element, the contacting means (22) consisting of dissipative contact elements which pass through an adhesive bed (26) forming a type of insulating layer between an end cap (14) and the end region (18) of the filter medium (10) accommodated by this end cap (14) and in this way coming into dissipative contact with the filter medium (10), **characterised in that** the dissipative contact elements consist of contact pins (24) which pass through the adhesive bed (26) with their one free end and in the region of the other free end stand vertically upright on the respectively assignable end cap (14).

2. The filter element according to Claim 1, **characterised in that** in order to form the dissipative end cap (14) or its parts, plastics with a conductivity additive, conductive coatings or intrinsically conductive plastics are used.

3. The filter element according to Claim 1 or 2, **characterised in that** the filter medium (10) is made of a pleated or cylindrically shaped filter mat with filter plies in several layers on top of each other which are made entirely or partially of dissipative plastic materials.

4. The filter element according to Claim 3, **characterised in that** the filter mat is reinforced at least on the outer and/or inner peripheral side with fabric materials of plastic or metal.

5. The filter element according to any of Claims 1 to 4, **characterised in that** the filter medium (10) in the flow direction is supported on the support tube (20) which is provided with passages and which is preferably made of a plastic material.

6. The filter element according to any of Claims 1 to 5, **characterised in that** the contact pins (24) are made of a conductive metal or a dissipative plastic.

7. The filter element according to any of Claims 1 to 6, **characterised in that** the contact pins (24) are arranged in concentric circles to the longitudinal axis (30) of the filter element in at least one (14) of the two end caps.

8. The filter element according to any of Claims 1 to 7, **characterised in that** at least one end cap (14) is provided to the inside and outside with at least one respective projecting annular surface (28) between which the end region (18) of the filter medium (10) can be accommodated.

9. The filter element according to any of Claims 1 to 8, **characterised in that** the respective end cap (14) with the contacting means (22) has a connecting part (32) for fixing the filter element in a filter housing and that a sealing means (34), in particular in the form of an O-sealing ring, which, when using the filter element, is located between a filter housing and the end cap (14) of the filter element, is designed to be dissipative.

## Revendications

1. Elément formant filtre comprenant un milieu (10) filtrant, qui s'étend entre deux chapeaux (12, 14) d'extrémité, lesquels sont reliés respectivement à une zone (16, 18) d'extrémité du milieu (10) filtrant, qui peut leur être associée et qui s'appuie au moins d'un côté sur un tuyau (20) d'appui, dans lequel au moins l'un des chapeaux (14) d'extrémité et/ou au moins une zone (16, 18) d'extrémité du milieu (10) filtrant a un dispositif (22) de mise en contact et les chapeaux d'extrémité respectifs eux-mêmes ou des parties s'en détournant sont constitués en vue de la décharge des charges électrostatiques se produisant, notamment lorsque l'élément formant filtre fonctionne, le dispositif (22) de mise en contact étant constitué d'éléments de contact aptes à la décharge, qui traversent un lit (26) de colle formant une sorte de couche isolante entre un chapeau (14) d'extrémité et la zone (18) d'extrémité, coiffée par ce chapeau (14) d'extrémité, du milieu (10) filtrant et vient s'appliquer d'une manière apte à la décharge au milieu (10) filtrant, **caractérisé en ce que** les éléments de contact aptes à la décharge sont constitués de broches (24) de contact, qui traversent par l'une de leurs extrémités libres le lit (26) de colle et qui, dans la région de l'autre extrémité libre, se dressent verticalement sur le chapeau (14) d'extrémité pouvant être associé respectivement.

2. Elément formant filtre suivant la revendication 1, **caractérisé en ce que**, pour la formation du chapeau (14) d'extrémité apte à la décharge ou de ses parties, il est utilisé des matières plastiques ayant un additif conducteur, des revêtements conducteurs ou des matières plastiques conductrices intrinsèquement.

3. Elément formant filtre suivant la revendication 1 ou 2, **caractérisé en ce que** le milieu (10) filtrant est en un mat de filtre plissé ou conformé cylindriquement et ayant des strates filtrantes superposées à plusieurs couches, qui sont en tout ou partie en matières plastiques aptes à la décharge.

4. Elément formant filtre suivant la revendication 3, **caractérisé en ce que**, au moins du côté de la périphérie extérieure et/ou intérieure, le mat de filtre est renforcé par des matériaux tissés en matière plastique ou en métal.

5. Elément formant filtre suivant l'une des revendications 1 à 4, **caractérisé en ce que** le milieu (10) filtrant s'appuie dans le sens de passage sur le tuyau (20) d'appui pourvu de traversées et constitué de préférence en une matière plastique.

6. Elément formant filtre suivant l'une des revendications 1 à 5, **caractérisé en ce que** les broches (24) de contact sont en un métal conducteur ou en une matière plastique apte à la décharge.

7. Elément formant filtre suivant l'une des revendications 1 à 6, **caractérisé en ce que** les broches (24) de contact sont disposées en cercles concentriques par rapport à l'axe (30) longitudinal de l'élément formant filtre dans au moins l'un (14) des deux chapeaux d'extrémité.

8. Elément formant filtre suivant l'une des revendications 1 à 7, **caractérisé en ce qu'**au moins un chapeau (14) d'extrémité est pourvu vers l'intérieur et vers l'extérieur respectivement d'au moins une surface (28) annulaire en saillie, entre lesquelles la zone (18) d'extrémité du milieu (10) filtrant peut être logée.

9. Elément formant filtre suivant l'une des revendications 1 à 8, **caractérisé en ce que** le chapeau (14) d'extrémité respectif avec le dispositif (22) de mise en contact comporte une partie (32) de raccordement pour la fixation de l'élément formant filtre dans un corps de filtre et **en ce qu'**un dispositif (34) d'étanchéité, notamment sous la forme d'un joint torique, qui, lors d'une utilisation de l'élément formant filtre, est disposé entre un corps de filtre et le chapeau (14) d'extrémité de l'élément formant filtre, est apte à la décharge.
